# EUROPEAN PATENT SPECIFICATION

(11) **EP 2 650 066 B1**
(45) Date of publication and mention of the grant of the patent: **03.06.2015**
(21) Application number: 12163610.4
(22) Date of filing: 10.04.2012
(51) Int. Cl.: B23B 27/06, B23B 27/14, B23B 27/16, B23B 29/04

(54) **Thread cutting insert, tool holder and tool for forming heavy duty threads**
Gewindeschneideinsatz, Werkzeughalter und Werkzeug zum Bilden von Hochleistungsgewinden
Insert de coupe à fileter, porte-outil et outil pour formation de filetages ultra-résistants

(43) Date of publication of application: 16.10.2013
(73) Proprietor: VARGUS Ltd., 22311 Nahariya (IL)
(72) Inventor: Margulis, Rafael, 21940 Carmiel (IL); Zaretsky, Artur, 36770 Nesher (IL)
(74) Representative: Patentanwälte Ruff, Wilhelm, Beier, Dauster & Partner

(56) References cited:
- WO-A1-2008/073037
- US-A1- 2007 248 425
- US-A1- 2009 035 075
- US-A1- 2011 110 733

## Description

The invention relates to a thread cutting insert according to the preamble of claim 1, a tool holder according to the preamble of claim 10, and a tool according to the preamble of claim 14 for forming heavy duty threads by turning.

In the context of the application, thread forms having a stronger thread profile than standard threads, such as ISO metric screw threads or UTS threads, are referred to as heavy duty threads. The stronger thread profiles make the heavy duty threads particularly useful in translational applications such as power transmission applications involving moving heavy machine loads as found on machine tools, slurry pumps etc. Typically, with heavy duty threads pitches range from 10 mm to 24 mm. A large number of heavy duty threads are formed as "trapezoidal" threads or trapeze threads, i.e. threads with included angles between 29° and 30°. Examples for heavy duty threads include (not limited to) Knuckle Threads (DIN 20400), Acme, Stub Acme, ISO TR-DIN 103, Buttress, and Dardelet threads.

For forming a heavy duty thread it is well known to use a turning lathe, in short lathe, in particular a numerically controlled lathe, wherein a tool comprising a tool holder and a thread cutting insert affixed thereto is fed to a workpiece or machined component.

Cutting inserts are well known. For example, US 2011/0110733 A1 shows a cutting tool for grooving, parting and turning comprising an indexable cutting insert with two cutting portions located at opposite ends of the cutting insert and a fixing portion arranged therebetween. An insert bore opens out to both side surfaces of the cutting insert. At one of the side surfaces, two ribs are formed for providing two major abutment surfaces located on opposite sides of the insert bore that extend from said side surface, one major abutment surface being closer to the operative cutting portion than the other, and two minor abutment surfaces that extend from the same side surface. In a plan view of the side surface, the minor abutment surfaces are transverse to the two major abutment surfaces and also to base abutment surfaces associated with the major and minor abutment surfaces.

US 2009/035075 A1 shows a the cutting insert, in particular a face-grooving cutting insert, with a through bore for fixing the cutting insert to a tool holder, the cutting insert comprising a cutting portion extending from the tool holder and a mounting portion, wherein the mounting portion comprises a first, a second and a third insert abutment surface. The first and second insert abutment surfaces are situated at a greater distance from the cutting portion than the through bore, whereas the third insert abutment surface is located closer to the cutting portion than the through bore. In other words, the first and second insert abutment surfaces are separated from the third insert abutment surface by the through bore.

WO 2008/073037 A1 and US 2007/0248425 A1 show milling cutters, wherein a plurality of cutting inserts is fixed to a basic body. In accordance with WO 2008/073037 A1, the basic body is provided with a first connecting surface in which a chute is included that comprises two side-flank surfaces diverging from a bottom. In accordance with US 2007/0248425 A1 the cutting insert comprises a plurality of knobs provided at a contact surface.

US 7,832,964 B2 relates to an indexable thread turning insert, comprising an upperside and an underside between which three side surfaces extend that are situated in a first imaginary, equilateral triangle and therefore converge in pairs at an angle of 60° toward corners in which cutting edges are included, wherein the underside includes three elongate and straight engagement members, each defined by a groove having a pair of opposite diverging flanks, and located in a second imaginary triangle having an equilateral shape, which is smaller than the first imaginary triangle and rotated in relation to the first imaginary triangle.

US 2007/0245866 A1 proposes an thread cutting insert for forming a heavy duty thread, which insert is received in a pocket of a tool holder having converging sidewalls, wherein at least one insert supporting surface comprises a pattern of recessed and projecting areas corresponding to and being adapted to locate the insert relative to a pattern of projecting and recessed areas on a corresponding abutment surface of the pocket of the tool holder. The projecting and recessed areas extend in parallel with a longitudinal centreline of the insert and, in use of the insert, parallel to the radial direction of the workpiece.

It is the object of the invention to provide a thread cutting insert and a tool for forming heavy duty threads by turning with a high rigidity of the tool for producing heavy duty threads of high quality and in short cycle times.

This object is solved by a thread cutting insert, a tool holder, and a tool comprising a thread cutting insert and a tool holder with the features of claims 1, 10, and 14.

It is the basic idea of the invention to provide a thread cutting insert for forming a heavy duty thread by turning, which insert is releaseably securable to a tool holder having a support surface, such that a longitudinal direction of the thread cutting insert in use extends in parallel to a radial direction of a workpiece, wherein the thread cutting insert is provided with a top surface having at least one cutting edge and a bottom surface for contacting the support surface of the tool holder, the bottom surface being stepped to provide a first planar contact portion and a second planar contact portion adjacent thereto, and a first abutment wall extending at least partially in the longitudinal direction being formed between the first planar contact portion and the second planar contact portion.

The at least one cutting edge is provided on at least one cutting tip or cutting corner of the insert. The direction, in which the cutting tip protrudes, is defined as the longitudinal direction of the insert. The longitudinal direction in one embodiment coincides with the radial direction of the workpiece within machining tolerances.

In use, cutting forces act on the cutting edge. The first abutment wall prevents or at least hampers a rotational displacement of the thread cutting insert due to the cutting forces. In particular when forming a thread with a flank infeed or a modified flank infeed, the first abutment wall extending in the longitudinal direction is suitable for counteracting the cutting forces.

In the context of the application, a radial feed direction is defined as the radial direction of the workpiece, in which the tool is fed towards the workpiece. An axial feed direction is defined as the direction parallel to the longitudinal direction, also referred to as axis of rotation, of the workpiece, in which the tool is fed. During machining, the tool is moved along the longitudinal direction of workpiece with a constant radial feed depth. For each subsequent pass, the infeed depth is increased and the cutting process is repeated. The ratio between the increase in radial feed depth and the increase in axial feed depth for subsequent passes determines the infeed angle. In the context of the application, the infeed angle is defined as the angle between the longitudinal axis of the workpiece and the (main) cutting edge or cutting tip. An infeed with an infeed angle of 0° is referred to as radial infeed. When using a radial infeed, the tool is fed in the radial feed direction for subsequent passes. Thereby, a chip is removed from both sides of thread flanks formed and, depending on the shape of the cutting edge, a U-shaped or V-shaped chip is formed. Due to this form of the chip, in some applications a chip flow may cause problems. In particular when forming a heavy duty thread with pitches ranging for example from 14 mm to 24 mm, an infeed with an infeed angle greater than 0°, more particular greater than 15°, preferably between 15° and 30° is advantageous. In the context of this application, an infeed with an infeed angle between 10° and 35°, preferably between 15° and 30°, wherein the infeed angle is parallel with the flank of the thread to be formed, is referred to as flank infeed. An infeed with an infeed angle between 10° and 35°, preferably between 15° and 30°, wherein the infeed angle is offset to the flank of the thread to be formed by an offset angle, is referred to as modified flank infeed. The offset angle preferably is chosen between 0.5 ° and 3°. All pitch and angle specifications are given by way of example only and include respective tolerance ranges.

According to one embodiment, the first abutment wall extends perpendicular to the first and the second contact portion. A respective first abutment wall can be formed with high precision.

According to another embodiment, the first abutment wall is oriented away from a cutting entry side of the insert. The cutting entry side is defined in the context of the application as the side of the insert facing in the feed direction. When using a flank infeed, the main cutting edge is provided at the cutting entry side. A cutting force when turning with a flank infeed or a modified flank infeed will be transferred from a body of the thread cutting inserts directly to the holder via the first abutment wall. According to another embodiment, the first abutment wall extends over the length of insert in the longitudinal direction. This allows a simple manufacturing avoiding the formation of insular contact portions confined by a plurality of potential abutment walls.

In another embodiment, a second abutment wall extending at an angle to the longitudinal direction, in particular extending perpendicular to the longitudinal direction, is provided at a side surface of the insert between the bottom surface and a top surface. The second abutment wall is preferably provided at a side surface opposite a cutting tip or cutting corner at which the at least one cutting edge is provided. The second planar contact portion is offset to the first planar contact portion in a direction away from a top surface. Preferably, an inclined transition wall is provided at least between the second abutment wall and the second planar contact portion of the insert for avoiding an interlocking in corner region between the second abutment wall and the second planar contact portion when positioning the insert on the tool holder.

In one embodiment, the cutting insert is fixed to the tool holder by means of a clamping jaw. In preferred embodiments, a through-hole is provided for receiving a clamping screw for fixing the cutting insert to the tool holder. In one embodiment, an additional clamping jaw is provided. In one embodiment, the through-hole is provided in the shadow of the cutting edge. In the context of the application, a region spanned by the cutting edge of the cutting insert is referred to as shadow of the cutting edge. By locating the clamping inside the cutting edge of the insert, a clamping of the insert to the tool holder is further improved.

According to a second aspect, a tool holder for a tool for forming a heavy duty thread is provided, the tool holder having a support surface that is stepped to provide a first planar support portion and a second planar support portion adjacent thereto with a first counter abutment wall between the first planar support portion and the second planar support portion for receiving a thread cutting insert.

In one embodiment, the first counter abutment wall is non-linear and at least partly curved or buckled, wherein at least a section of the first counter abutment wall extends in the radial feed direction of the tool holder. In use, the radial feed direction of the tool holder coincides with the longitudinal direction of the insert secured to the tool holder. The section of the first counter abutment wall is explicitly suitable to receive a component of a load applied to the insert by a cutting force in the axial feed direction. In order to avoid an over-determination when positioning the insert, the section is chosen small enough for minimizing the contact area, but large enough for ensuring a force transmission. The wide of the first planar support portion of the tool holder in the axial feed direction in preferred embodiments is chosen sufficiently large for providing a sufficient volume and, hence, a sufficient strength of the first planar support portion in the region of the section even when the length in the radial feed direction of the tool holder is minimized.

In one embodiment, the tool holder comprises a shank and a projection, wherein the support surface is provided on the projection. The shape of the projection and/or the support surface is matched to the shape of the insert.

In another embodiment, a second counter abutment wall extending at an angle to the radial feed direction, in particular extending perpendicular to the radial feed direction is provided. The second counter abutment wall is provided to balance a component of the cutting force in contact with the second abutment wall. In preferred embodiments the second counter abutment wall is divided in at least two sections offset to each other for realizing a stable positioning at the two sections.

According to a third aspect, a tool for forming a heavy duty thread comprising a tool holder and a cutting insert is provided. In preferred embodiments, the tool further comprises a clamping screw. The tool has a high rigidity and allows to machine heavy duty threads with high accuracy.

Preferred embodiments are defined in the dependent claims.

In the following, an embodiment of the invention will be described in detail based on several schematic drawings in which
- Fig. 1: is an isometric view of tool comprising a tool holder with a thread cutting insert;
- Fig. 2: is an exploded isometric view of the tool of Fig. 1;
- Fig. 3: is a top view of the tool of Fig. 1;
- Fig. 4: is an isometric view from the bottom on the thread cutting insert of Fig. 1; and
- Fig. 5: is an isometric view from the top on the thread cutting insert of Fig. 1.

Throughout the drawings, the same elements will be denoted by the same reference numerals.

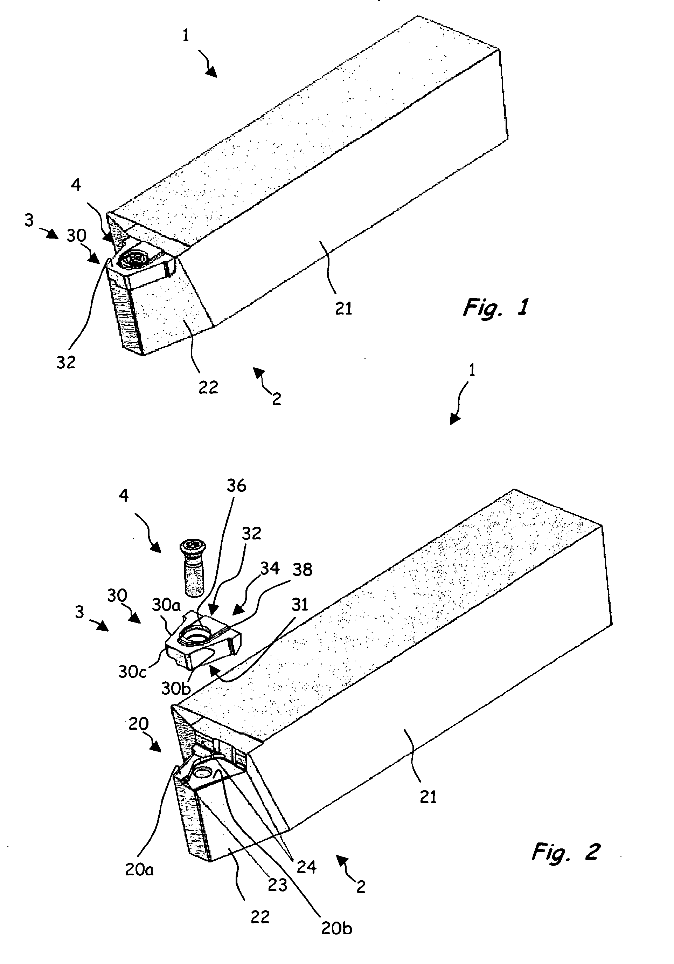

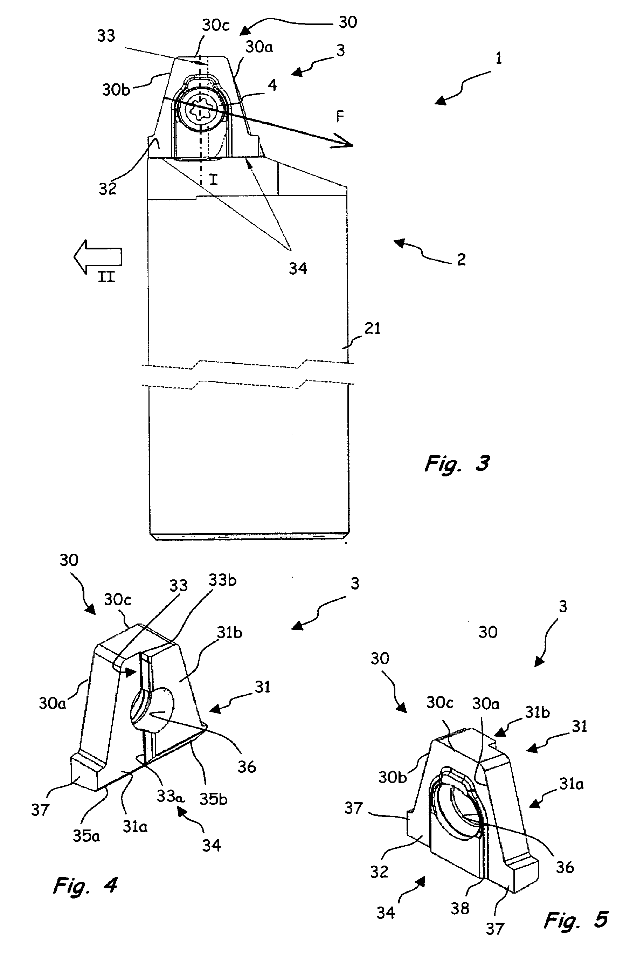

Fig. 1, 2 and 3 show a tool 1 comprising a tool holder 2, a thread cutting insert 3 (also referred to simply as insert 3) and a clamping screw 4 in an isometric view, an exploded isometric view, and a top view, respectively. Fig. 4 and 5 show isometric views from the bottom and the top on the insert 3 of Fig. 1, respectively.

The thread cutting insert 3 is releasably secured to the tool holder 2, more particular to a support surface 20 (see Fig. 2) of the tool holder 2, such that a longitudinal direction I of the thread cutting insert 3 in use extends parallel to a radial direction of a workpiece (not shown).

The tool holder 2 comprises a shank 21 and a projection 22 formed integrally with the shank 21, wherein the support surface 20 is provided on the projection 22. In the depicted embodiment, the form of the projection 22 of the tool holder 2 coincides with the form of the insert 3. In other embodiments, the insert 3 partly protrudes from the support surface 20.

The thread cutting insert 3 is provided with a cutting edge 30, a bottom surface 31 for contacting the support surface 20 of the tool holder 2, and a top surface 32, wherein the cutting edge 30 is provided at an edge of the top surface 32. The bottom surface 31 is stepped to provide a first planar contact portion 31 a and a second planar contact portion 31 b adjacent thereto. By providing the step, the second planar contact portion 31 b is offset to the first planar contact portion 31 a in a direction away from the top surface 32 of the insert 3. The top surface 32 is essentially planar, therefore the height of the insert 3 perpendicular to the bottom surface 31 differs in the areas of the first planar contact portion 31 a and the second planar contact portion 31 b. Between the first planar contact portion 31 a and the second planar contact portion 31 b a first abutment wall 33 extending in the longitudinal direction I over the entire length of insert 3 is formed. In the embodiment shown, transition regions 33a, 33b are formed between the first abutment wall 33 and the first contact portion 31 a and the second contact portion 31 b, respectively, for avoiding over-determinations when securing the insert 3 to the tool holder 2.

A second abutment wall 34 extending perpendicular to the longitudinal direction I is provided at a side surface of the insert between the bottom surface 31 and a top surface 32. Inclined transition walls 35a, 35b are provided between the second abutment wall 34 and the first planar contact portion 31 a and the second planar contact portion 31 b, respectively, for avoiding an interlocking in corner regions when positioning the insert 3 on the support surface 20. In the depicted embodiment, the inclined transition walls 35a, 35b are formed with a common inclination angle, thereby the size of the inclined transition wall 35b between the second abutment wall 34 and the second planar contact portion 31 b exceeds the size of the inclined transition wall 35a provided between the second abutment wall 34 and the first planar contact portion 31 a.

The support surface 20 of the tool holder 2 is also stepped to provide a first planar support portion 20a and a second planar support portion 20b adjacent thereto with a first counter abutment wall 23 between the first planar support portion 20a and the second planar support portion 20b for receiving the thread cutting insert 3. The first counter abutment wall 23 is non-linear and comprises a curved section and a planar section, wherein the planar section is provided at the distal end of the projection 22 and extends in the radial feed direction. When positioning the insert 3 on the tool holder 2, the abutment wall 33 contacts the planar section of the counter abutment wall 23.

The tool holder 2 is further provided with a second counter abutment wall 24, which delimits the support surface 20 at the back in the radial feed direction. In the depicted embodiment the counter abutment wall 24 is divided in two sections offset to each other in the axial feed direction. Thereby, two distinct abutment areas are provided.

The cutting edge 30 is formed with a profile for forming a desired thread profile. The cutting edge 30 shown in the figures is essentially U-shaped with three part edges, namely a first flank edge 30a, a second flank edge 30b, and a central or outer part edge 30c, sandwiched between the first flank edge 30a and the second flank edge 30b.

The shape of the insert 3 is chosen to match the profile of the thread formed. In the depicted embodiment, the thread cutting insert 3 has an essentially trapezoidal shape, with two bases of different length, wherein the second abutment surface 34 is provided on the longer base of the trapezoid and the central edge 30c of the cutting edge 30 is provided on the opposite base of the trapezoid. The first flank edge 30a and the second flank edge 30b are provided on the flanks of the trapezoid.

The thread cutting insert 3 is provided with a through-hole 36 and the tool holder 2 is provided with a complementary thread hole for receiving the clamping screw 4. The through-hole 36 for the clamping screw 4 is located inside a region spanned by the cutting edge 30 of the thread cutting insert 3. This region is also referred to as shadow of the cutting edge 30.

On each side surface of the thread cutting insert 3, at which the first flank edge 30a and the second flank edge 30b, respectively, are located, a side wing 37 is provided. The side wings 37 define the depth of the thread to be cut. In preferred embodiments, the side wings 37 are provided with a secondary cutting edge for a deburring of the crest of the cut thread. The top surface 32 is provided with a step 38 in the region of the through-hole 36 for the clamping screw 4. The step 38 allows for an improved formation of the cutting edge 30 and, if applicable the secondary cutting edge formed at the side wings 37.

The tool 1 is moved in a feed direction II shown in Fig. 3 for forming a thread in a workpiece. When using a flank infeed or a modified flank infeed, the second flank edge 30b provided at a cutting entry side of the insert 3, i.e. at the side of the insert 3 facing in the feed direction II, functions as main cutting edge. A cutting force F acting on the insert 3 when using a flank infeed or a modified flank infeed is schematically shown in Fig. 3. In the embodiment shown, the first abutment wall 33 is oriented away from the cutting entry side. The cutting force F is transferred from the thread cutting inserts 3 via the first abutment wall 33 and the second abutment wall 34 to the counter abutment surfaces 23 and 24 of the tool holder 2, respectively. This allows a very stable positioning with high rigidity. As in the depicted embodiment, the clamping screw 4 is located in the shadow of the cutting edge 30, a clamping of the insert 3 to the support surface 20 and the counter abutment surfaces 23 and 24 is further enhanced.

## Claims

1. Thread cutting insert for forming a heavy duty thread by turning, which insert (3) is releaseably securable to a tool holder (2) having a support surface (20), such that a longitudinal direction (I) of the thread cutting insert (3) in use extends in parallel to a radial direction of a workpiece, wherein the thread cutting insert (3) is provided with a top surface (32) having at least one cutting edge (30) and a bottom surface (31) for contacting the support surface of the tool holder,
**characterized in that**
the bottom surface (31) is stepped to provide a first planar contact portion (31 a) and a second planar contact portion (31 b) adjacent thereto, wherein a first abutment wall (33) extending at least partially in the longitudinal direction (I) is formed between the first planar contact portion (31 a) and the second planar contact portion (31 b).

2. Thread cutting insert according to claim 1, **characterized in that** the first abutment wall (33) extends perpendicular to the first and the second contact portion (31 a, 31 b).

3. Thread cutting insert according to claim 1 or 2, **characterized in that** the first abutment wall (33) is oriented away from a cutting entry side of the insert.

4. Thread cutting insert according to claim 1, 2 or 3, **characterized in that** the first abutment wall (33) extends over the length of insert (3) in the longitudinal direction (I).

5. Thread cutting insert according to any of claims 1 to 4, **characterized in that** a second abutment wall (34) extending at an angle to the longitudinal direction (I), in particular extending perpendicular to the longitudinal direction (I), is provided at a side surface of the insert between the bottom surface (31) and a top surface (32).

6. Thread cutting insert according to claim 5, **characterized in that** an inclined transition wall (35b) is provided at least between the second abutment wall (34) and the second planar contact portion (31 b), wherein the second planar contact portion (31 b) is offset to the first planar contact portion (31 a) in a direction away from the top surface (32) of the insert (3).

7. Thread cutting insert according to any of claims 1 to 6, **characterized in that** a through-hole (36) is provided for receiving a clamping screw (4).

8. Thread cutting insert according to claim 7, **characterized in that** the through-hole (36) is provided in a shadow of the cutting edge (30).

9. Thread cutting insert according to any of claims 1 to 8, **characterized in that** the thread cutting insert (3) has a cutting edge (30) which is essentially U-shaped with a first flank edge (30a), a second flank edge (30b) and a central edge (30c) sandwiched between the first flank edge (30a) and the second flank edge (30b)

10. Tool holder for a tool for forming a heavy duty thread, the tool holder (2) having a support surface (20),
**characterized in that**
the support surface (20) is stepped to provide a first planar support portion (20a) and a second planar support portion (20b) adjacent thereto with a first counter abutment wall (23) between the first planar support portion (20a) and the second planar support portion (20b) for receiving a thread cutting insert (3) in accordance with any of claims 1 to 9.

11. Tool holder according to claim 10, **characterized in that** the first counter abutment wall (23) is non-linear and at least partly curved or buckled, wherein at least a section of the first counter abutment wall (23) extends in a radial feed direction of the tool holder (2).

12. Tool holder according to claim 10 or 11 , **characterized in that** the tool holder (2) comprises a shank (21) and a projection (22), wherein the support surface (20) is provided on the projection (22).

13. Tool holder according to claim 10, 11 or 12, **characterized in that** a second counter abutment wall (24) extending at an angle to radial feed direction, in particular extending in an axial feed direction, is provided.

14. Tool for forming a heavy duty thread, comprising a tool holder (2) and a thread cutting insert (3) according to any of claims 1 to 9.

15. Tool for forming a heavy duty thread according to claim 14, further comprising a clamping screw (4).

## Patentansprüche

1. Gewindeschneideinsatz zum Ausbilden eines Hochleistungsgewindes durch Drehen, wobei der Einsatz (3) lösbar an einem Werkzeughalter (2) mit einer Trägerfläche (20) derart befestigbar ist, dass eine Längsrichtung (I) des Gewindeschneideinsatzes (3) sich bei Gebrauch parallel zu einer radialen Richtung eines Werkstücks erstreckt, wobei der Gewindeschneideinsatz (3) mit einer Oberseite (32) mit mindestens einer Schneidkante (30) und einer Unterseite (31) zum Kontaktieren der Trägerfläche des Werkzeughalters versehen ist,
**dadurch gekennzeichnet, dass**
die Unterseite (31) abgestuft ist, so dass ein erster planarer Kontaktabschnitt (31 a) und daran anschließend ein zweiter planarer Kontaktabschnitt (31 b) vorgesehen sind, wobei eine erste Anlagewand (33), die sich mindestens teilweise in Längsrichtung (I) erstreckt, zwischen dem ersten planaren Kontaktabschnitt (31a) und dem zweiten planaren Kontaktabschnitt (31b) ausgebildet ist.

2. Gewindeschneideinsatz nach Anspruch 1, **dadurch gekennzeichnet, dass** die erste Anlagewand (33) sich senkrecht zum ersten und zweiten Kontaktabschnitt (31a, 31 b) erstreckt.

3. Gewindeschneideinsatz nach Anspruch 1 oder 2, **dadurch gekennzeichnet, dass** die erste Anlagewand (33) von einer Anschnittseite des Einsatzes abgewandt angeordnet ist.

4. Gewindeschneideinsatz nach Anspruch 1, 2 oder 3, **dadurch gekennzeichnet, dass** die erste Anlagewand (33) sich über die Länge des Einsatzes (3) in Längsrichtung (I) erstreckt.

5. Gewindeschneideinsatz nach einem der Ansprüche 1 bis 4, **dadurch gekennzeichnet, dass** eine zweite Anlagewand (34), die sich in einem Winkel zur Längsrichtung (I) erstreckt, insbesondere sich senkrecht zur Längsrichtung (I) erstreckt, an einer Seitenfläche des Einsatzes zwischen der Unterseite (31) und einer Oberseite (32) vorgesehen ist.

6. Gewindeschneideinsatz nach Anspruch 5, **dadurch gekennzeichnet, dass** eine geneigte Übergangswand (35b) mindestens zwischen der zweiten Anlagewand (34) und dem zweiten planaren Kontaktabschnitt (31 b) vorgesehen ist, wobei der zweite planare Kontaktabschnitt (31 b) zum ersten planaren Kontaktabschnitt (31 a) in eine von der Oberseite (32) des Einsatzes (3) weg weisende Richtung versetzt ist.

7. Gewindeschneideinsatz nach einem der Ansprüche 1 bis 6, **dadurch gekennzeichnet, dass** eine Durchgangsbohrung (36) zum Aufnehmen einer Spannschraube (4) vorgesehen ist.

8. Gewindeschneideinsatz nach Anspruch 7, **dadurch gekennzeichnet, dass** die Durchgangsbohrung (36) in einem Schatten der Schneidkante (30) vorgesehen ist.

9. Gewindeschneideinsatz nach einem der Ansprüche 1 bis 8, **dadurch gekennzeichnet, dass** der Gewindeschneideinsatz (3) eine Schneidkante (30) aufweist, die im Wesentlichen U-förmig und mit einer ersten Flankenkante (30a), einer zweiten Flankenkante (30b) und einer Mittelkante (30c), die sandwichartig zwischen der ersten Flankenkante (30a) und der zweiten Flankenkante (30b) angeordnet ist, ausgebildet ist.

10. Werkzeughalter für ein Werkzeug zum Ausbilden eines Hochleistungsgewindes, wobei der Werkzeughalter (2) eine Trägerfläche (20) aufweist,
**dadurch gekennzeichnet, dass**
die Trägerfläche (20) abgestuft ist, so dass ein erster planarer Trägerabschnitt (20a) und daran anschließend ein zweiter planarer Trägerabschnitt (20b) vorgesehen sind, mit einer ersten Gegenanlagewand (23) zwischen dem ersten planaren Trägerabschnitt (20a) und dem zweiten planaren Trägerabschnitt (20b) zum Aufnehmen eines Gewindeschneideinsatzes (3) nach einem der Ansprüche 1 bis 9.

11. Werkzeughalter nach Anspruch 10, **dadurch gekennzeichnet, dass** die erste Gegenanlagewand (23) nichtlinear und mindestens teilweise gewölbt oder gebogen ausgebildet ist, wobei mindestens ein Teil der ersten Gegenanlagewand (23) sich in eine radiale Zustellrichtung des Werkzeughalters (2) erstreckt.

12. Werkzeughalter nach Anspruch 10 oder 11, **dadurch gekennzeichnet, dass** der Werkzeughalter (2) ein Einsteckende (21) und einen Vorsprung (22) umfasst, wobei die Trägerfläche (20) auf dem Vorsprung (22) vorgesehen ist.

13. Werkzeughalter nach Anspruch 10, 11 oder 12, **dadurch gekennzeichnet, dass** eine zweite Gegenanlagewand (24), die sich in einem Winkel zur radialen Zustellrichtung erstreckt, insbesondere sich in eine axiale Zustellrichtung erstreckt, vorgesehen ist.

14. Werkzeug zum Ausbilden eines Hochleistungsgewindes, umfassend einen Werkzeughalter (2) und einen Gewindeschneideinsatz (3) nach einem der Ansprüche 1 bis 9.

15. Werkzeug zum Ausbilden eines Hochleistungsgewindes nach Anspruch 14, weiter umfassend eine Spannschraube (4).

## Revendications

1. Insert de coupe à fileter pour formation de filetages ultra-résistants par tournage, lequel insert (3) peut être fixé de manière amovible à un porte-outil (2) ayant une surface de support (20), de telle sorte qu'une direction longitudinale (I) de l'insert de coupe à fileter (3) s'étende, lors de l'utilisation, parallèlement à une direction radiale d'une pièce, l'insert de coupe à fileter (3) étant pourvu d'une surface supérieure (32) ayant au moins une arête de coupe (30) et d'une surface inférieure (31) pour venir en contact avec la surface de support du porte-outil,
**caractérisé en ce que**
la surface inférieure (31) est étagée pour produire une première portion de contact plane (31a) et une deuxième portion de contact plane (31b) adjacente à celle-ci, une première paroi de butée (33) s'étendant au moins partiellement dans la direction longitudinale (I) étant formée entre la première portion de contact plane (31 a) et la deuxième portion de contact plane (31 b).

2. Insert de coupe à fileter selon la revendication 1, **caractérisé en ce que** la première paroi de butée (33) s'étend perpendiculairement à la première et à la deuxième portion de contact (31 a, 31 b).

3. Insert de coupe à fileter selon la revendication 1 ou 2, **caractérisé en ce que** la première paroi de butée (33) est orientée à l'écart d'un côté d'entrée de coupe de l'insert.

4. Insert de coupe à fileter selon la revendication 1, 2 ou 3, **caractérisé en ce que** la première paroi de butée (33) s'étend sur la longueur de l'insert (3) dans la direction longitudinale (I).

5. Insert de coupe à fileter selon l'une quelconque des revendications 1 à 4, **caractérisé en ce qu'**une deuxième paroi de butée (34) s'étendant suivant un angle par rapport à la direction longitudinale (I), en particulier s'étendant perpendiculairement à la direction longitudinale (I), est prévue au niveau d'une surface latérale de l'insert entre la surface inférieure (31) et une surface supérieure (32).

6. Insert de coupe à fileter selon la revendication 5, **caractérisé en ce qu'**une paroi de transition inclinée (35b) est prévue au moins entre la deuxième paroi de butée (34) et la deuxième portion de contact plane (31 b), la deuxième portion de contact plane (31 b) étant décalée par rapport à la première portion de contact plane (31a) dans une direction à l'écart de la surface supérieure (32) de l'insert (3).

7. Insert de coupe à fileter selon l'une quelconque des revendications 1 à 6, **caractérisé en ce qu'**un trou traversant (36) est prévu pour recevoir une vis de serrage (4).

8. Insert de coupe à fileter selon la revendication 7, **caractérisé en ce que** le trou traversant (36) est prévu dans une région d'étendue de l'arête de coupe (30).

9. Insert de coupe à fileter selon l'une quelconque des revendications 1 à 8, **caractérisé en ce que** l'insert de coupe à fileter (3) a une arête de coupe (30) qui est essentiellement en forme de U avec une première arête de flanc (30a), une deuxième arête de flanc (30b) et une arête centrale (30c) prise en sandwich entre la première arête de flanc (30a) et la deuxième arête de flanc (30b).

10. Porte-outil pour un outil pour formation d'un filetage ultra-résistant, le porte-outil (2) ayant une surface de support (20),
**caractérisé en ce que**
la surface de support (20) est étagée pour produire une première portion de support plane (20a) et une deuxième portion de support plane (20b) adjacente à celle-ci avec une première paroi de contre-butée (23) entre la première portion de support plane (20a) et la deuxième portion de support plane (20b) pour recevoir un insert de coupe à fileter (3) selon l'une quelconque des revendications 1 à 9.

11. Porte-outil selon la revendication 10, **caractérisé en ce que** la première paroi de contre-butée (23) est non linéaire et au moins partiellement incurvée ou gauchie, au moins une section de la première paroi de contre-butée (23) s'étendant dans une direction d'avance radiale du porte-outil (2).

12. Porte-outil selon la revendication 10 ou 11, **caractérisé en ce que** le porte-outil (2) comprend une tige (21) et une saillie (22), la surface de support (20) étant prévue sur la saillie (22).

13. Porte-outil selon la revendication 10, 11 ou 12, **caractérisé en ce qu'**une deuxième paroi de contre-butée (24) s'étendant suivant un angle par rapport à la direction d'avance radiale, en particulier s'étendant dans une direction d'avance axiale, est prévue.

14. Outil pour formation d'un filetage ultra-résistant, comprenant un porte-outil (2) et un insert de coupe à fileter (3) selon l'une quelconque des revendications 1 à 9.

15. Outil pour formation d'un filetage ultra-résistant selon la revendication 14, comprenant en outre une vis de serrage (4).
